Europäisches Patentamt

European Patent Office

Office européen des brevets

(19)

(11) Publication number: **0 125 734**
**A2**

(12) # EUROPEAN PATENT APPLICATION

(21) Application number: **84200675.1**

(22) Date of filing: **10.05.84**

(51) Int. Cl.³: **A 22 B 7/00**

(30) Priority: **11.05.83 DE 8334871 U**
**23.11.83 DE 8333560 U**

(43) Date of publication of application:
**21.11.84 Bulletin 84/47**

(84) Designated Contracting States:
**AT BE CH DE FR GB IT LI LU NL SE**

(71) Applicant: **MACHINEFABRIEK G.J. NIJHUIS B.V.**
**Parallelweg 4 Postbus 102**
**NL-7100 AC Winterswijk(NL)**

(72) Inventor: **Ossenbrink, Franz-Josef**
**Albert-Schweitzer-Strasse 33a**
**D-4504 Georgsmarienhütte(DE)**

(74) Representative: **van der Beek, George Frans et al,**
**Nederlandsch Octrooibureau Johan de Wittlaan 15 P.O.**
**Box 29720**
**NL-2502 LS The Haque(NL)**

(54) Transport hook for meat or other foodstuffs.

(57) The invention relates to a meat hook comprising a stirr-up like runner part for cooperation with a tubular track and a hook part to be inserted in the carcass or meat to be suspended by the meat hook, the improvement being that to reduce friction a plastic slide element is placed in a recess of that runner part side turned towards the track, the runner part and/or hook part preferably being made from light metal, e.g. aluminum.

fig-1

Croydon Printing Company Ltd.

EP 0 125 734 A2

1

Transport hook for meat or other foodstuffs.

The present innovation relates to a transport hook for meat or other foodstuffs, consisting of a stirrup-like runner part and a plastics slide together with a hook part.

Transport hooks of this generic type are known per se. Such transport hooks are primarily used as hanging devices for carcasses and are therefore frequently also known as meat hooks. The transport hooks are suspended on tubular tracks and in practical use are shifted along on these tubular tracks for transport purposes.

In order both to improve the sliding of the transport hooks on the tubular tracks and to reduce the friction between the transport hooks and the tubular tracks and the associated soiling, the transport hooks have been provided with plastics slides.

In the case of conventional transport hooks having a plastics slide, this slide is designed as a sleeve-like sheath around the bent region of the runner part. In order to achieve an intimate connection of the slide to the runner part, it is customary to shrink the sheath on to the runner part.

Apart from the fact that such slides can possess only relative small wall thicknesses and thus are also worn out relatively rapidly, the practical effect of damage to the slide is that the entire transport hook is unusable, as it is not economically feasible to repair a transport hook with a damaged slide.

The object of the present innovation is to design a transport hook of said generic type in such a way that the slide can be of relatively solid construction and can also be exchanged easily and conveniently in case of need.

This object is achieved, according to the innovation, in that the slide is designed as a segment-like moulding and is inserted in a recess in the runner part.

This design permits the use of relatively solid slides, which, moreover, in the event of damage, are relatively easily removed and replaced by new slides.

Further features of the innovation are the subject of sub-claims.

It is further noted that a transport hook for meat is known , for example from European Patent Application 0,070,818, wherein the entire runner part consists of plastic. This known solution is relatively costly and cannot be used without special measures if the sliding track leads through, for example, a singeing oven. An excessively high temperature is disadvantageous for the plastics runner part.

According to the invention, however, the plastics moulding lies protected in the recess and is subject only to compressive stress, whereas the entire runner part is subject to flexural stress and has a large unprotected surface exposed to the heat.

In the attached drawings examplary embodiments of the innovation are shown, and these are described in detail in the text which follows. In the drawings:

Fig. 1 shows a view of a transport hook according to the innovation,

Fig. 2 shows a view of a plastics slide of the transport hook shown in Fig. 1,

Fig. 3 shows a section along the line III-III in Fig. 2,

Fig. 4 shows a view of the hook part of the transport hook shown in Fig. 1 in the direction of the arrow IV in Fig. 1,

Fig. 5 shows a view of a runner part of a transport hook according to the innovation in accordance with a further exemplary embodiment of the innovation,

Fig. 6 shows a partial view in the direction of the arrow VI in Fig. 5,

Fig. 7 shows a section along the line VII-VII in Fig. 5,

Fig. 8 shows a view of a slide for the transport hook in accordance with the exemplary embodiment according to Fig. 5,

Fig. 9 shows the slide acording to Fig. 8 with fixing screw, the slide itself being shown in section along the line IX-IX in Fig. 8,

Fig. 10 shows a section along the line X-X in Fig. 8,

Fig. 11 shows a view of a runner part of a transport hook according to a further exemplary embodiment of the innovation,

Fig. 12 shows a view of the slide of the runner part according to Fig. 11,

Fig. 13 shows a section along the line XIII-XIII in Fig. 12,

Fig. 14 shows a view of the slide in accordance with a further exemplary embodiment of the innovation, and,

Fig. 15 shows a section along the line XV-XV in Fig. 14.

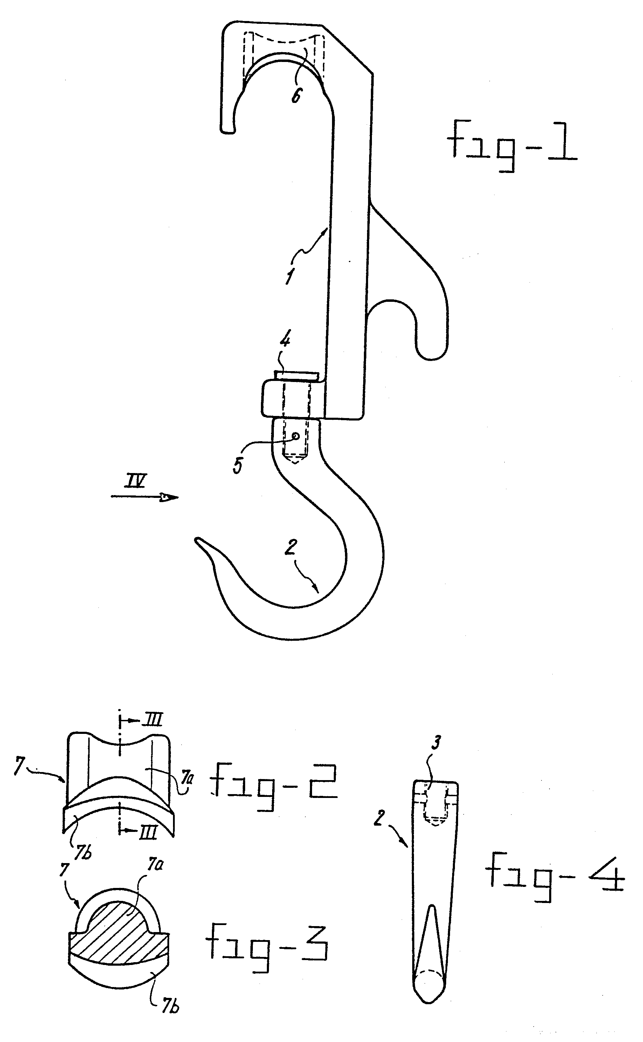

Fig. 1 shows a transport hook which, in a manner known per se, consists of an upper, stirrup-like runner part 1 and a hook part 2 rotatably connected thereto.

The hook part 2 is provided in its upper end region with an interior thread 3 into which is screwed a bearing bolt 4 resting on the runner part 1.

Due to a cross-pin 5 passing through the bearing bolt 4, twisting between hook part 2 and bearing bolt 4 is no longer possible after assembly. Only the entire hook part 2 can be twisted relative to the runner part 1.

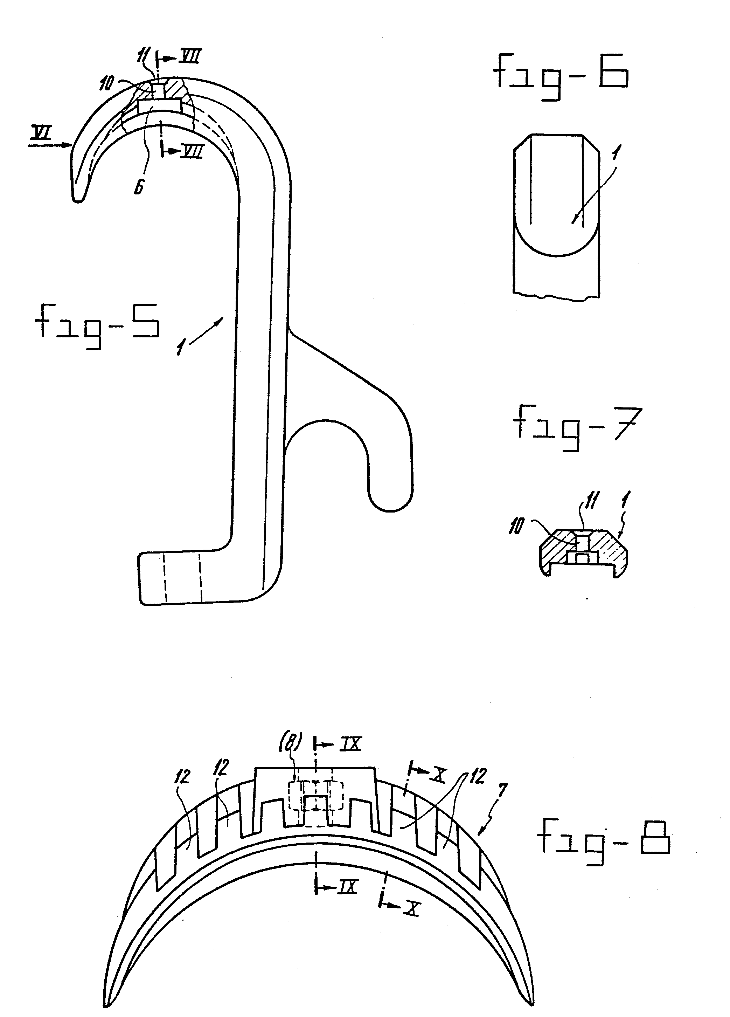

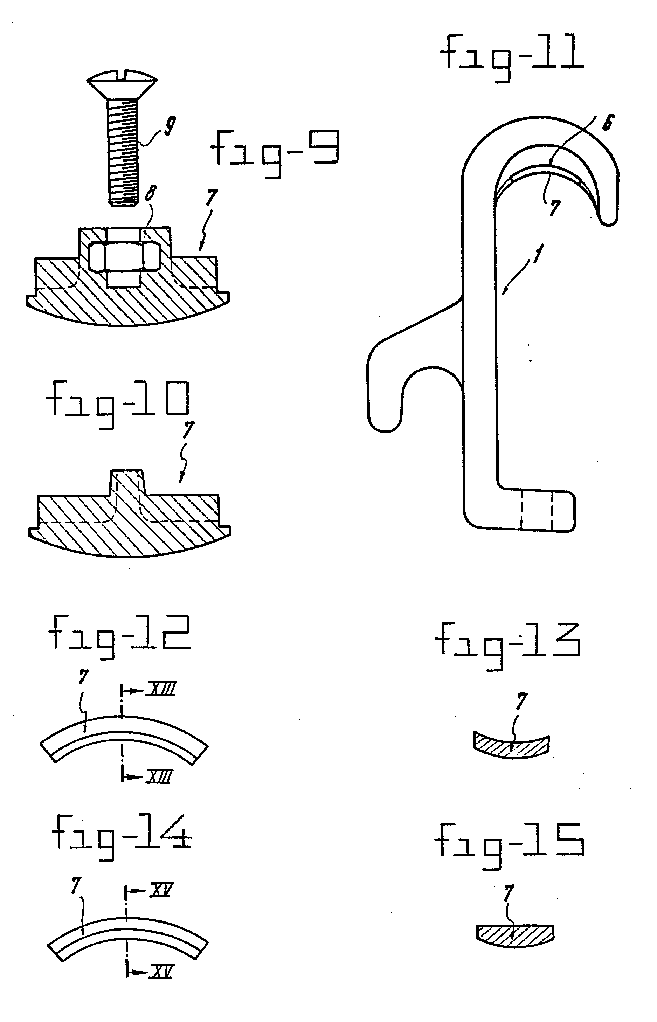

The runner part 1 is provided in its upper end region with a recess 6 into which a plastics slide 7 can be inserted. As is very clearly shown in Figs. 2 and 3, the slide 7 is constructed as a solid plastics moulding and equipped with a shoulder 7a, which can be inserted into the recess 6 in the runner part 1 with a positive connection. The lower end 7b of the slide 7 is of segment-like design and matched to the curvature of the runner part 1.

In the case of the exemplary embodiment shown in Figs. 5 to 10, the runner part 1 of the transport hook is in turn provided with a recess 6 into which a plastics slide 7 can be inserted. The slide according to Figs. 8 to 10 is also of substantially segment-like design, and here has as a special feature a threaded insert 8.

This threaded insert 8 serves to receive a fixing screw 9 which passes through the runner part 1 from its other side. Additional securing of the slide 7 in the runner part 1 is thus achieved.

The curvature of the segment-like slide 7 is matched to the curvature of the stirrup-like runner part 1, and it is advantageous to provide the slide 7 with a convexity which is slightly less than that of the runner part 1, as this measure ensures that when the fixing screw 9 is tightened the thin lateral flanks of the slide 7 likewise bear tightly against the boundaries of the recess 6 in the runner part 1.

For the passage of the fixing screw 9, the runner part 1 according to Figs. 5 and 7 is equipped with a drilled passage hole 10 having a countersink 11.

Fig. 11 shows a simple embodiment of a runner part 1, designed according to the innovation, for a transport hook . In this case a simple slide 7 in the form of a segment is simply snapped into a corresponding recess 6 in the runner part 1. Possible shapes for such simple slides can be seen in Figs. 12 to 14.

It is common to all exemplary embodiments that the slides 7 not only are relatively solid and hence also very durable but also can be replaced  by new slides with relatively little trouble in the event of wear or damage.

This is particularly important in that the slides 7 have to absorb the highest stresses on the entire transport hook, and the other parts of the transport hook, namely the runnr part 1 and the hook part 2, are manufactured from metal and hence have a relatively long service life.

The runner parts 1 of the transport hooks shown are preferably made of aluminium.

The slide 7 according to the exemplary embodiment shown in Figs. 8 to 10 also exhibits a special feature in that the region projecting into the recess 6 in the runner part 1 is provided with a large number of individual ribs 12. This presents two simultaneous advantages. First, this ribbing results in relatively low wall thicknesses for the slide 7 as a whole, so that the quantity of material used remains proportionately low. Secondly, these low wall thicknesses mean that the slide 7 can be very favourably produced as an injection-moulded plastics part.

It is also possible to equip the slide 7 directly with a threaded hole and to fix to the runner part 1 by means of a fixing screw 9.

The threaded insert 8 preferably consists of a hexagonal nut cast inside the slide 7.

With all the embodiments, it is advantageous if at least the upper part, namely the stirrup-like runner part, consists of aluminium, which is not to say that the hook part also cannot consist of light metal. The advantage of using aluminium lies in the fact that its weight is lower than that of steel. This also reduces the danger of accident. The hook can, in the known manner, have a hook part or spreader part which is rotatably connected to the runner part or which is fixedly connected thereto or integral therewith.

**0125734**

CLAIMS.

1. Transport hook for meat or other foodstuffs, consisting of a stirrup-like runner part having a plastics slide and a hook part, characterized in that the slide (7) is designed as a segment-like moulding and is inserted in a recess (6) in the runner part (1).

2. Transport hook according to claim 1, characterized in that the slide (7) is fixed to the runnr part (1) by means of a fixing screw (9) passing through the runner part (1).

3. Transport hook according to claim 2, characterized in that the slide (7) is equipped with a threaded insert (8) into which the fixing screw (9) is screwed.

4. Transport hook according to claim 3, characterized in that the threaded insert (8) is a hexagonal nut.

5. Transport hook according to claim 1, characterized in that the slide (7) is snapped into the recess (6) in the runner part (1).

6. Transport hook according to one or more of the preceding claims, characterized in that the slide (7) is designed as an injection-moulded plastics part.

7. Transport hook according to one or more of the preceding claims, characterized in that the region of the slide (7) projecting into the recess (6) in the runner part (1) is provided with a large number of ribs (12).

8. Transport hook according to one or more of the preceding claims, characterized in that the slide (7) is designed with a slightly flatter convexity than that of the runner part (1) in the region in which the slide (7) is located.

9. Transport hook according to one or more of the preceding claims, characterized in that at least the stirrup-like runner part consists of aluminium.

fig-1

fig-2

fig-3

fig-4

fig-5

fig-6

fig-7

fig-8

0125734

fig-11

fig-9

fig-10

fig-12

fig-13

fig-14

fig-15